# EUROPÄISCHE PATENTSCHRIFT

(11) **EP 1 306 000 B1**
(45) Veröffentlichungstag und Bekanntmachung des Hinweises auf die Patenterteilung: **25.03.2009**
(21) Anmeldenummer: 02019329.8
(22) Anmeldetag: 29.08.2002
(51) Int. Cl.: A01D 57/20

(54) **Verfahren zur Optimierung der Erzeugung von qualitativ hochwertigem Futter**
Method for optimizing the harvesting of high-quality forage
Procédé pour l'optimisation de la recolte de fourrage de qualité supérieure

(30) Priorität: 23.10.2001 DE 10151571
(43) Veröffentlichungstag der Anmeldung: 02.05.2003
(60) Teilanmeldung: 06020235.5
(73) Patentinhaber: CLAAS Saulgau GmbH, 88348 Bad Saulgau (DE)
(72) Erfinder: Geng, Manfred, 88348 Bad Saulgau (DE); Gausmann, Ludger, 49170 Hagen (DE); Gruber, Georg, 88348 Bad Saulgau (DE); Loebe, Stefan, 48231 Warendorf (DE); Renger, Herman, 33129 Delbrück (DE)
(74) Vertreter: Roth, Klaus

(56) Entgegenhaltungen:
- EP-A- 0 882 386
- EP-A- 1 068 791
- CA-A- 1 183 355
- DE-A- 4 407 546
- DE-U- 29 719 765
- US-A- 3 343 347
- US-A- 6 145 289
- US-B1- 6 205 757

## Beschreibung

Die Erfindung betrifft ein Verfahren zur Optimierung der Erzeugung von qualitativ hochwertigem Futter gemäß dem Oberbegriff des Anspruches 1.

In dem deutschen Gebrauchsmuster DE 297 19 765 U wird ein Fahrzeug mit drei Mäheinheiten offenbart. Eine Mäheinheit ist frontseitig an einen Schlepper gekoppelt, die beiden anderen sind an den Seiten des Schleppers angeordnet. Zur Erzeugung eines Großschwadens wird das Erntegut des frontseitigen Mähwerkes zwischen den Rädern hindurch gefördert. Die beiden seitlichen Mähwerke fördern das Erntegut jeweils in Richtung auf das Fahrzeug zu, so dass ein Großschwaden entsteht, dessen Höhe durch den Freiraum zwischen den Rädern und den Abstand zwischen dem höchsten Punkt der Bodenoberfläche und dem tiefsten Punkt der Oberfläche der Fahrzeugunterseite begrenzt ist. Diese Anordnung hat den Nachteil, dass es insbesondere bei hohem Futteraufkommen (z. B. beim ersten Schnitt des Jahres) zu einem Gutstau unterhalb des Schleppers kommt, was nicht nur einen unregelmäßig geformten Schwaden zur Folge hat, der an der nachfolgenden schwadaufnehmenden Maschine bei der Weiterverarbeitung erhebliche Probleme verursacht, sondern auch zu einer erheblichen Verschmutzung des Schleppers führt.

Ein weiteres System zur Erzeugung eines Großschwadens durch einen selbstfahrenden Schwader wird in der CA 1183355 offenbart. Der beschriebene dreiteilige Schwader legt das Erntegut des Frontmähwerkes direkt neben der Außenseite eines Rades ab. Die schwadnahe seitliche Mäheinheit fördert das Gut auf diesen Schwaden zu. Die schwadferne Mäheinheit transportiert das Erntegut unterhalb des Schleppers zu den anderen Schwaden. Durch eine solche Konstruktion wird eine unnötige Verschmutzung der Unterseite der Maschine verursacht, die zu erhöhten Ausfall- und Stillstandszeiten führen kann. Zudem entstehen bei der Schwadablage neben den Rädern Schwierigkeiten bei Kurvenfahrten und im Vorgewende, da die Räder des Schleppers über den abgelegten Schwaden fahren müssen. Das führt zwangsläufig zu einer stark erhöhten Futterverschmutzung. Um diesen Nachteil zu vermeiden, werden mitunter Hinterräder mit geringerer Breite und kleinerem Durchmesser für den Schlepper gewählt, was allerdings zu erheblichen Strukturschäden der bearbeiteten Böden führt.

Der Erfindung liegt daher die Aufgabe zugrunde, ein Schwadablagesystem zu entwickeln, das unter größtmöglicher Schonung sowohl der schwadablegenden Maschine als auch der nachfolgenden schwadaufnehmenden Maschine und des Bodens kostengünstig und zuverlässig möglichst saubere Großschwaden erzeugt.

Erfindungsgemäß wird die Aufgabe durch ein Verfahren mit den kennzeichnenden Merkmalen des Anspruches 1 gelöst.

Dadurch, dass bei der Bearbeitung des ersten Streifens der Schwaden des wenigstens einen Frontmähwerks mit dem Schwaden des mindestens einen Seitenmähwerks zusammengelegt wird und erst bei der Bearbeitung des benachbarten zweiten Streifens der Großschwaden durch das Hinzulegen des Schwadens des mindestens einen Seitenmähwerks entsteht, gelingt es, einen Großschwaden zu erzeugen, ohne unter der Maschine hindurchfördern zu müssen. Dadurch werden insbesondere die eingangsbeschriebenen Nachteile der Futterverschmutzung und des ungleichmäßig geformten Schwadens vermieden.

Der Mähmesserantrieb des wenigstens einen rechten bzw. linken Seitenmähwerks verfügt über eine Einrichtung, die beim Ausheben des rechten bzw. linken Seitenmähwerks den Mähmesserantrieb selbsttätig abschaltet. Durch eine derartige Einrichtung können die Gefährdungen durch sich lösende Mähmesser für die direkte Umgebung minimiert werden.

Das wenigstens eine rechte Seitenmähwerk kann während der Arbeit des mindestens einen linken Seitenmähwerks und des wenigstens einen Frontmähwerks und/oder das wenigstens eine linke Seitenmähwerk während der Arbeit des mindestens einen rechten Seitenmähwerks und des wenigstens einen Frontmähwerks ausgehoben werden. Durch das Ausheben insbesondere der randstreifenseitigen Seitenmähwerke kann bei sehr guten Sichtverhältnissen für den Fahrer mit dem wenigstens einen Frontmähwerk und dem wenigstens einen zur Feldmitte orientierten Seitenmähwerk gemäht werden, wobei die zugehörigen Schwaden zusammengelegt werden, ohne dass ein kleiner Schwaden am Randstreifen zurückbleibt.

In besonders vorteilhafter Weise können die Fördereinrichtungen des wenigstens einen Frontmähwerks bei der Bearbeitung eines ersten Bearbeitungsstreifens das Erntegut außerhalb der zu erwartenden Fahrspur ablegen, wobei der Schwaden des Frontmähwerks mit dem Schwaden des wenigstens einen rechten bzw. linken Seitenmähwerks zusammengelegt wird und bei der Bearbeitung des angrenzenden zweiten Bearbeitungsstreifens der Schwaden des Frontmähwerkes außerhalb der zu erwartenden Fahrspur abgelegt wird, wobei der Schwaden des Frontmähwerks mit dem Schwaden des wenigstens einen linken bzw. rechten Mähwerks zusammengelegt wird, während der Schwaden des mindestens einen rechten bzw. linken Mähwerks mit dem Schwaden des ersten Bearbeitungsstreifens zusammengelegt wird. Dadurch ist es möglich, die benachbarten Streifen auch in entgegengesetzter Fahrtrichtung zu bearbeiten.

In einer besonders vorteilhaften Ausführungsform ist die Austragsrichtung der Fördereinrichtungen der Mähwerke umkehrbar, so dass auch eine Bearbeitung von benachbarten Streifen in entgegengesetzter Fahrtrichtung bei gleichbleibendem Volumen des Großschwadens möglich ist. Auf eine derartige Änderung der Austragsrichtungen der Fördereinrichtung kann durch die konsequente Beibehaltung der Bearbeitungsrichtung auf den benachbarten Bearbeitungsstreifen jedoch auch verzichtet werden.

In einer weiteren erfindungsgemäßen Ausführungsform existiert eine vorwählbare Routinesteuerung für das Vorgewende, die zumindest eine Teilautomatisierung der komplexen Tätigkeiten zur Umstellung der Maschine auf einen Streifen, der in entgegengesetzter Fahrtrichtung bearbeitet werden soll, und somit eine Richtungsumkehr aller Querfördereinrichtungen erfordert, bewirkt. In einer vorteilhaften Ausführungsform beinhaltet die vorwählbare Routinesteuerung für das Vorgewende, dass erst das wenigstens eine Frontmähwerk und dann die linken und rechten Seitenmähwerke angehoben werden, und danach oder währenddessen die Arbeitsrichtung der Fördereinrichtung des Frontmähwerks bzw. der Fördereinrichtungen der Frontmähwerksgruppen umgekehrt wird. Weiterhin ist es von Vorteil, wenn die vorwählbare Routinesteuerung für das Vorgewende auch beinhaltet, dass nach oder während der Umkehrung der Arbeitsrichtung der Fördereinrichtung des Frontmähwerks bzw. der Fördereinrichtungen der Frontmähwerksgruppen das zuvor angehobene Frontmähwerk bzw. die Frontmähwerksgruppen und danach die zuvor angehobenen rechten und linken Seitenmähwerke abgesenkt werden.

Das erfindungsgemäße Verfahren wird nachfolgend anhand von in Zeichnungen dargestellten Ausführungsbeispielen näher erläutert.

Es zeigen
- Figur 1: die erfindungsgemäße Bildung von Großschwaden durch ein mehrteiliges Mähwerk bei zwei Streifen mit gleichgerichteter Bearbeitungsrichtung
- Figur 2: die erfindungsgemäße Bildung von Großschwaden durch ein mehrteiliges Mähwerk bei zwei Streifen mit entgegengesetzter Bearbeitungsrichtung
- Figur 3: die erfindungsgemäße Bildung von Großschwaden durch ein mehrteiliges Mähwerk bei zwei Streifen mit gleichgerichteter Bearbeitungsrichtung, wobei es sich bei einem Streifen um einen Randstreifen handelt

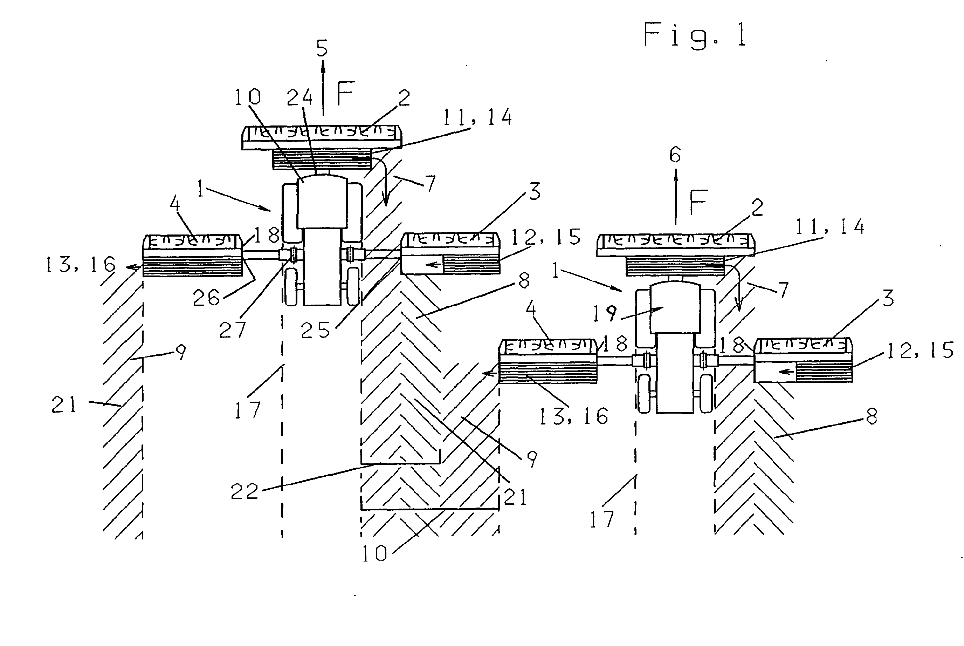

In Figur 1 ist ein mehrteiliges Mähwerk (1) dargestellt, das aus einem Frontmähwerk und einem rechten und einem linken Seitenmähwerk (3, 4) besteht. Dieses Mähwerk (1) mäht nacheinander wenigstens zwei benachbarte Bearbeitungsstreifen (5, 6) in paralleler Arbeitsrichtung. Die Schwaden (7) des Frontmähwerks (2) werden in diesem Ausführungsbeispiel mit den Schwaden (8) des rechten Seitenmähwerks (3) rechts neben der zu erwartenden Fahrspur (17) abgelegt, während der Schwaden (9) des linken Seitenmähwerks (4) von dem mehrteiligen Mähwerk (1) weg nach außen gefördert wird, so dass dieser Schwaden (9) des zweiten Bearbeitungsstreifens (6) jeweils zu den zusammengelegten Schwaden (7 und 8) des Frontmähwerks (2) und des rechten Seitenmähwerks (3) des ersten Bearbeitungsstreifens (5) zu einem Großschwaden (10) zusammengelegt werden. Die Fördereinrichtungen des Frontmähwerks und der Seitenmähwerke (11, 12, 13) sind in diesem Beispiel als Querförderbänder (14, 15, 16) ausgebildet.

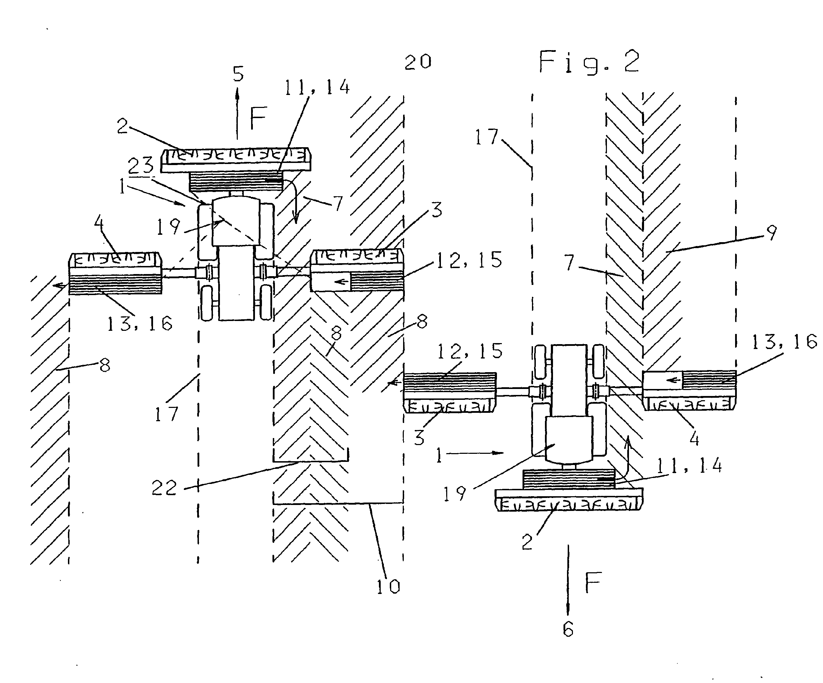

In Figur 2 ist ein mehrteiliges Mähwerk (1) abgebildet, das nacheinander wenigsten zwei benachbarte Bearbeitungsstreifen (5, 6) in entgegengesetzter Arbeitsrichtung mäht. Unter diesen Bedingungen müssen zur Bildung von Großschwaden (10) beim Bearbeiten des zweiten Streifens (6) die Förderrichtungen aller Fördereinrichtungen (11, 12, 13) für das Erntegut (21) entgegengesetzt zu den Förderrichtungen bei der Bearbeitung des ersten Streifens (5) gewählt werden. Die Richtungsumkehr aller Fördereinrichtungen (11, 12, 13) wird vorzugsweise durch eine Routinesteuerung (19) bewirkt, bei der beispielsweise auf ein elektromagnetisches Signal (23) hin die Antriebe (24, 25, 26) für die Querförderbänder (14, 15, 16) ihre Drehrichtung ändern. Für das Vorgewende (20) besteht zusätzlich zu der Richtungsumkehr der Querförderbänder (14, 15, 16) die Notwendigkeit, die Mähwerke (2, 3, 4) auszuheben, um eine unkontrollierte Mähgutaufnahme und Breitverteilung während des Wendevorganges zu vermeiden. Auf ein vorzugsweise elektromagnetisches Signal (23) hin werden in der Vorgewendesteuerung zunächst das Frontmähwerk (2) und dann die Seitenmähwerke (3, 4) angehoben, danach wird die Drehrichtung der Querförderbänder (14, 15, 16) umgekehrt, dann werden das Frontmähwerk (2) und kurz darauf die Seitenmähwerke (3, 4) wieder abgesenkt.

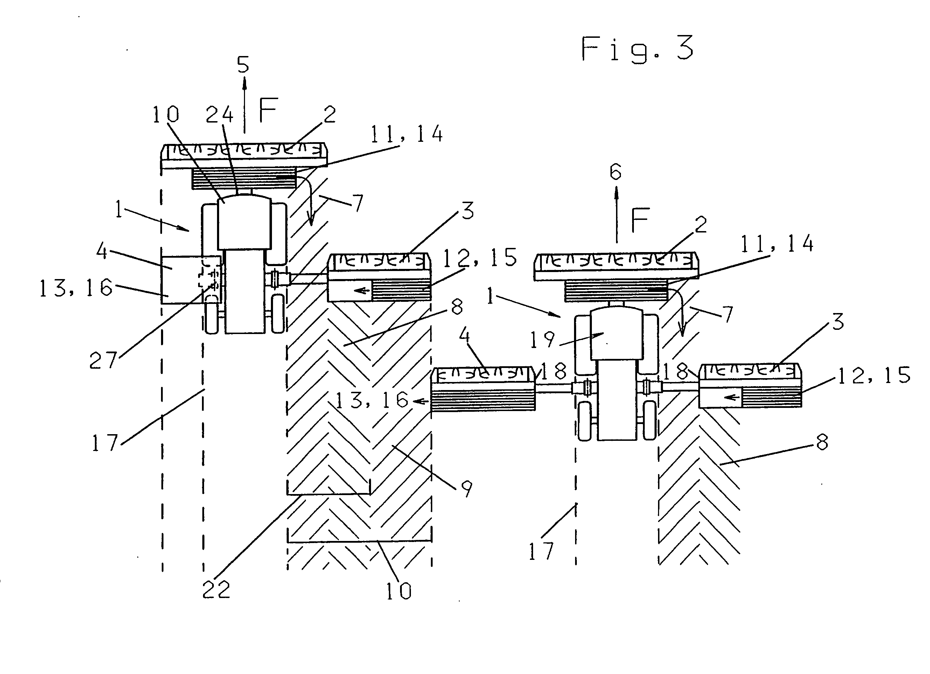

In Figur 3 ist ein mehrteiliges Mähwerk (1) dargestellt, das nacheinander zwei Streifen (5, 6) mit gleichgerichteter Arbeitsrichtung bearbeitet. Bei dem ersten Streifen (5) handelt es sich um einen Randstreifen. Das linke Seitenmähwerk (4) wird zur Bearbeitung des Randstreifens (5) um die Achse (27) in eine Nichtarbeitsposition verschwenkt. Gleichzeitig wird der Antrieb für die Mähmesser (18) selbsttätig ausgeschaltet.

### Bezugszeichenliste

- 1: Mähwerk
- 2: Frontmähwerk
- 3: rechtes Seitenmähwerk
- 4: linkes Seitenmähwerk
- 5: erster Bearbeitungsstreifen
- 6: zweiter Bearbeitungsstreifen
- 7: Schwaden des Frontmähwerks
- 8: Schwaden des rechten Seitenmähwerks
- 9: Schwaden des linken Seitenmähwerks
- 10: Großschwaden
- 11: Fördereinrichtung des Frontmähwerks
- 12: Fördereinrichtung des rechten Seitenmähwerks
- 13: Fördereinrichtung des linken Seitenmähwerks
- 14: Querförderband des Frontmähwerks
- 15: Querförderband des rechten Seitenmähwerks
- 16: Querförderband des linken Seitenmähwerks
- 17: Fahrspur
- 18: Mähmesserantrieb
- 19: Routinesteuerung
- 20: Vorgewende
- 21: Erntegut
- 22: Schwaden des ersten Bearbeitungsstreifens
- 23: elektromagnetisches Signal
- 24: Antrieb
- 25: Antrieb
- 26: Antrieb
- 27: Achse

- F: Fahrtrichtung

## Patentansprüche

1. Verfahren zur Erzeugung von Großschwaden auf einer landwirtschaftlichen Fläche mit wenigstens einem ersten und einem zweiten Bearbeitungsstreifen durch ein aus wenigstens einem Frontmähwerk (2), mindestens einem rechten Seitenmähwerk und wenigstens einem linken Seitenmähwerk (3, 4) bestehenden mehrteiligen selbstfahrenden Mähwerk, dessen einzelnen Mähwerken (2, 3, 4) Fördereinrichtungen zugeordnet sind, die das Erntegut im Wesentlichen quer zur Fahrtrichtung des selbstfahrenden Mähwerks fördern, **dadurch gekennzeichnet, dass** bei der Bearbeitung des ersten Bearbeitungsstreifens (5) der Schwad (7) des wenigstens einen Frontmähwerks (2) mit dem Schwad (8, 9) wenigstens eines Seitenmähwerks (3, 4) zusammengelegt wird und erst bei der Bearbeitung des benachbarten zweiten Bearbeitungsstreifens (6) der Großschwaden (10) durch das Hinzulegen zumindest eines weiteren Schwadens (8, 9) wenigstens eines Seitenmähwerks (3, 4) entsteht und dass der Mähmesserantrieb (18) des wenigstens einen rechten bzw. linken Seitenmähwerks (3, 4) beim Ausheben des rechten bzw. linken Seitenmähwerks (3, 4) selbsttätig abschaltet und dass das wenigstens eine rechte Seitenmähwerk (3) während der Arbeit des mindestens einen linken Seitenmähwerks (4) und des wenigstens einen Frontmähwerks (2) ausgehoben werden kann oder dass das wenigstens eine linke Seitenmähwerk (4) während der Arbeit des mindestens einen rechten Seitenmähwerks (3)..und des wenigstens einen Frontmähwerks (2) ausgehoben werden kann.

2. Verfahren nach Anspruch 1
**dadurch gekennzeichnet,**
**dass** die Fördereinrichtung (11) des wenigstens einen Frontmähwerks (2) bei der Bearbeitung eines ersten Bearbeitungsstreifens (5) das Erntegut (21) außerhalb der zu erwartenden Fahrspur (17) ablegt, wobei der Schwaden (7) des Frontmähwerks (2) mit dem Schwaden (8) des wenigstens einen rechten Seitenmähwerks (3) zusammengelegt wird und bei der Bearbeitung des angrenzenden zweiten Bearbeitungsstreifens (6) der Schwaden (7) des Frontmähwerkes (2) außerhalb der zu erwartenden Fahrspur (17) abgelegt wird, wobei der Schwaden (7) des Frontmähwerks (2) mit dem Schwaden (9) des wenigstens einen linken Mähwerks (4) zusammengelegt wird, während der Schwaden (8) des mindestens einen rechten Mähwerks (3) mit dem Schwaden (22) des ersten Bearbeitungsstreifens (5) zusammengelegt wird.

3. Verfahren nach Anspruch 1
**dadurch gekennzeichnet,**
**dass** die Fördereinrichtung (11) des wenigstens einen Frontmähwerks (2) bei der Bearbeitung eines ersten Bearbeitungsstreifens (5) das Erntegut (21) außerhalb der zu erwartenden Fahrspur (17) ablegt, wobei der Schwaden (7) des Frontmähwerks (2) mit dem Schwaden (9) des wenigstens einen linken Seitenmähwerks (4) zusammengelegt wird und bei der Bearbeitung des angrenzenden zweiten Bearbeitungsstreifens (6) der Schwaden (7) des Frontmähwerkes (2) außerhalb der zu erwartenden Fahrspur (17) abgelegt wird, wobei der Schwaden (7) des Frontmähwerks (2) mit dem Schwaden (8) des wenigstens einen rechten Mähwerks (3) zusammengelegt wird, während der Schwaden (9) des mindestens einen linken Mähwerks (4) mit dem Schwaden (22) des ersten Bearbeitungsstreifens (5) zusammengelegt wird.

4. Verfahren nach einem oder mehreren der vorhergehenden Ansprüche,
**dadurch gekennzeichnet,**
**dass** die Austragsrichtung der Fördereinrichtungen (11, 12, 13) umkehrbar ist.

5. Verfahren nach einem oder mehreren der vorhergehenden Ansprüche,
**dadurch gekennzeichnet,**
**dass** bei gleichgerichteter Fahrtrichtung auf benachbarten Bearbeitungsstreifen (5, 6) keine Änderung der Austragsrichtung der Fördereinrichtungen (11, 12, 13) erfolgt.

6. Verfahren nach einem oder mehreren der vorhergehenden Ansprüche,
**dadurch gekennzeichnet,**
**dass** bei entgegengesetzter Fahrtrichtung auf benachbarten Bearbeitungsstreifen (5, 6) die Austragsrichtung der Fördereinrichtungen (11, 12, 13) umgekehrt wird.

7. Verfahren nach einem oder mehreren der vorhergehenden Ansprüche,
**dadurch gekennzeichnet,**
**dass** eine vorwählbare Routinesteuerung (19) für das Vorgewende (20) existiert.

8. Verfahren nach Anspruch 7,
**dadurch gekennzeichnet,**
**dass** die vorwählbare Routinesteuerung (19) für das Vorgewende (20) beinhaltet, dass erst das wenigstens eine Frontmähwerk (2) und dann die linken und rechten Seitenmähwerke (3, 4) angehoben werden und danach oder währenddessen die Arbeitsrichtung der Fördereinrichtung (11) des Frontmähwerks (2) bzw. der Fördereinrichtungen (11) der Frontmähwerksgruppen (2) umgekehrt wird.

9. Verfahren nach einem oder mehreren der vorhergehenden Ansprüche 7 und 8,
**dadurch gekennzeichnet,**
**dass** die vorwählbare Routinesteuerung (19) für das Vorgewende (20) beinhaltet, dass nach oder während der Umkehrung der Arbeitsrichtung der Fördereinrichtung (11) des Frontmähwerks (2) bzw. der Fördereinrichtungen (11) der Frontmähwerksgruppen (2) das zuvor angehobene Frontmähwerk (2) bzw. die Frontmähwerksgruppen (2) und danach die zuvor angehobenen rechten und linken Seitenmähwerke (3, 4) abgesenkt werden.

10. Vorrichtung zur Erzeugung von Großschwaden auf einer landwirtschaftlichen Fläche mit wenigstens einem ersten und einem zweiten Bearbeitungsstreifen mit einem aus wenigstens einem Frontmähwerk, mindestens einem rechten Seitenmähwerk und wenigstens einem linken Seitenmähwerk bestehenden, mehrteiligen selbstfahrenden Mähwerk, dessen einzelnen Mähwerken Fördereinrichtungen zugeordnet sind, die das Erntegut im Wesentlichen quer zur Fahrtrichtung des selbstfahrenden Mähwerks befördern, **dadurch gekennzeichnet, dass** die Fördereinrichtung wenigstens eines Seitenmähwerks eine Förderrichtung nach außen hin aufweist, um die Schwadablage auf der Außenweite des Seitenmähwerks zu ermöglichen, dass der Mähmesserantrieb (18) des wenigstens einen rechten bzw. linken Seitenmähwerks (3, 4) eine Einrichtung umfasst, die beim Ausheben des rechten bzw. linken Seitenmähwerks (3, 4) den Mähmesserantrieb (18) selbsttätig abschaltet und dass Mittel vorgesehen sind, so dass das wenigstens eine rechte Seitenmähwerk (3) während der Arbeit des mindestens einen linken Seitenmähwerks (4) und des wenigstens einen Frontmähwerks (2) aushebbar ist oder so dass das wenigstens eine linke Seitenmähwerk (4) während der Arbeit des mindestens einen rechten Seitenmähwerks (3) und des wenigstens einen Frontmähwerks (2) aushebbar ist.

## Claims

1. Method for producing large swathes on an agricultural area with at least one first and one second working strip by means of a multipart self-propelled mower consisting of at least one front mower (2), at least one right side mower and at least one left side mower (3, 4), the individual mowers (2, 3, 4) of which are assigned conveying devices, which convey the harvest substantially at right angles to the travelling direction of the self-propelled mower, **characterised in that** when working the first working strip (5) the swath (7) of the at least one front mower (2) is laid together with the swath (8, 9) of at least one side mower (3, 4) and only when working the adjacent second working strip (6) is the large swath (10) formed by adding at least one further swath (8, 9) of at least one side mower (3, 4), and **in that** the mowing blade drive (18) of the at least one right or left side mower (3, 4) switches off automatically on retracting the right or left side mower (3, 4), and **in that** the at least one right side mower (3) can be retracted when working the at least one left side mower (4) and the at least one front mower (2) or In that the at least one left side mower (4) can be retracted when working the at least one right side mower (3) and the at least one front mower (2).

2. Method according to claim 1, **characterised in that** the conveying device (11) of the at least one front mower (2) when working a first working strip (5) lays down the harvest (21) outside the expected driving track (17), whereby the swath (7) of the front mower (2) is placed down together with the swath (8) of the at least one right side mower (3) and when working the adjoining second working strip (6) the swath (7) of the front mower (2) is laid down outside the expected driving track (17), whereby the swath (7) of the front mower (2) is placed together with the swath (9) of the at least one left mower (4), whereas the swath (8) of the at least one right mower (3) is placed together with the swath (22) of the first working strip (5).

3. Method according to claim 1, **characterised in that** the conveying device (11) of the at least one front mower (2) when working a first working strip (5) lays down the harvest (21) outside the expected driving track (17), whereby the swath (7) of the front mower (2) is placed down together with the swath (9) of the at least one left side mower (4) and when working the adjacent second working strip (6) the swath (7) of the front mower (2) is placed down outside the expected driving track (17), whereby the swath (7) of the front mower (2) is placed together with the swath (8) of the at least one right mower (3), whereas the swath (9) of the at least one left mower (4) is placed together with swath (22) of the first working strip (5).

4. Method according to one or more of the preceding claims, **characterised in that** the discharge direction of the conveying devices (11, 12, 13) Is reversible.

5. Method according to one or more of the preceding claims, **characterised in that** with the same travelling direction on adjacent working strips (5, 6) there is no change in the discharge direction of the conveying devices (11, 12, 13).

6. Method according to one or more of the preceding claims, **characterised in that** with an opposite travelling direction on adjacent working strips (5, 6) the discharge direction of the conveying devices (11, 12, 13) is reversed.

7. Method according to one or more of the preceding claims, **characterised in that** there is a preselectable routine control (19) for the turning area (20).

8. Method according to claim 7, **characterised in that** the preselectable routine control (19) for the turning area (20) includes lifting the at least one front mower (2) and then the left and right side mowers (3, 4) and after this or during this the working direction of the conveying device (11) of the front mower (2) or the conveying devices (11) of the front mower groups (2) is reversed.

9. Method according to one or more of the preceding claims 7 and 8, **characterised in that** the preselectable routine control (19) for the turning area (20) Includes, after or during the reversal of the operating direction of the conveying device (11) of the front mower (2) or the conveying devices (11) of the front mower groups (2), lowering the previously lifted front mower (2) or the front mower groups (2) and afterwards the previously lifted right and left side mowers (3, 4).

10. Method for producing large swathes on an agricultural area with at least one first and one second working strip with a multipart self-propelled mower consisting of at least one front mower, at least one right side mower and at least one left side mower, the individual mowers of which are assigned conveying devices, which convey the harvest substantially at right angles to the travelling direction of the self-propelled mower, **characterised in that** the conveying device of at least one side mower comprises a conveying device towards the outside, in order to allow the depositing of swaths on the outside of the side mower, **in that** the mowing blade drive (18) of the at least one right or left side mower (3, 4) comprises a device, which automatically switches off the mower blade drive (18) on retracting the right or left side mower (3, 4), and **in that** means are provided, so that the at least one right side mower (3) can be retracted during the operation of the at least one left side mower (4) and the at least one front mower (2), or so that the at least one left side mower (4) can be retracted during the operation of the at least one right side mower (3) and the at least one front mower (2).

## Revendications

1. Procédé destiné à former de grands andains sur une surface agricole avec au moins une première et une deuxième lignes de travail au moyen d'un mécanisme de fauchage automoteur à plusieurs éléments constitué d'au moins un mécanisme de fauchage avant (2), d'au moins un mécanisme de fauchage latéral droit et d'au moins un mécanisme de fauchage latéral gauche (3, 4), des dispositifs de transport étant associés aux différents mécanismes de fauchage (2, 3, 4) du mécanisme de fauchage, lesquels dispositifs de transport transportent la récolte essentiellement transversalement au sens de la marche du mécanisme de fauchage automoteur,
**caractérisé en ce que**, lors du traitement de la première ligne de travail (5), l'andain (7) du au moins un mécanisme de fauchage avant (2) est assemblé avec l'andain (8, 9) d'au moins un mécanisme de fauchage latéral (3, 4) et que, seulement lors du traitement de la deuxième ligne de travail (6) voisine, le grand andain (10) est formé par l'ajout d'au moins un autre andain (8, 9) d'au moins un mécanisme de fauchage latéral (3, 4) et **en ce que** la commande de lame de fauchage (18) du au moins un mécanisme de fauchage latéral droit ou gauche (3, 4) se coupe automatiquement lors du relevage du mécanisme de fauchage latéral droit ou gauche et **en ce que** le au moins un mécanisme de fauchage latéral droit (3) peut être relevé pendant le travail du au moins un mécanisme de fauchage latéral gauche (4) et du au moins un mécanisme de fauchage avant (2) ou que le au moins un mécanisme de fauchage latéral gauche (4) peut être relevé pendant le travail du au moins un mécanisme de fauchage latéral droit (3) et du au moins un mécanisme de fauchage avant (2).

2. Procédé selon la revendication 1,
**caractérisé en ce que** le dispositif de transport (11) du au moins un mécanisme de fauchage avant (2) dépose la récolte (21) à l'extérieur de la voie de roulage prévisible (17) lors du traitement d'une première ligne de travail (5), l'andain (7) du mécanisme de fauchage avant (2) étant assemblé avec l'andain (8) du au moins un mécanisme de fauchage latéral droit (3), et **en ce que**, lors du traitement de la deuxième ligne de travail (6) contigüe, l'andain (7) du mécanisme de fauchage avant (2) est déposé à l'extérieur de la voie de roulage prévisible (17), l'andain (7) du mécanisme de fauchage avant (2) étant assemblé avec l'andain (9) du au moins un mécanisme de fauchage gauche (4), tandis que l'andain (8) du au moins un mécanisme de fauchage droit (3) est assemblé avec l'andain (22) de la première ligne de travail (5).

3. Procédé selon la revendication 1,
**caractérisé en ce que** le dispositif de transport (11) du au moins un mécanisme de fauchage avant (2) dépose la récolte (21) à l'extérieur de la voie de roulage prévisible (17) lors du traitement d'une première ligne de travail (5), l'andain (7) du mécanisme de fauchage avant (2) étant assemblé avec l'andain (9) du au moins un mécanisme de fauchage latéral gauche (4) et, lors du traitement de la deuxième ligne de travail (6) contigüe, l'andain (7) du mécanisme de fauchage avant (2) est déposé à l'extérieur de la voie de roulage prévisible (17), l'andain (7) du mécanisme de fauchage avant (2) étant assemblé avec l'andain (8) du au moins un mécanisme de fauchage droit (3), tandis que l'andain (8) du au moins un mécanisme de fauchage gauche (4) est assemblé avec l'andain (22) de la première ligne de travail (5).

4. Procédé selon l'une ou plusieurs des revendications précédentes,
**caractérisé en ce que** la direction d'éjection des dispositifs de transport (11, 12, 13) est réversible.

5. Procédé selon l'une ou plusieurs des revendications précédentes,
**caractérisé en ce que**, lorsque le sens de la marche est inchangé sur les lignes de travail voisines (5, 6), il ne se produit aucune modification de la direction d'éjection des dispositifs de transport (11, 12, 13).

6. Procédé selon l'une ou plusieurs des revendications précédentes,
**caractérisé en ce que**, lorsque le sens de la marche est inversé sur les lignes de travail voisines (5, 6), la direction d'éjection des dispositifs de transport (11, 12, 13) est inversée.

7. Procédé selon l'une ou plusieurs des revendications précédentes,
**caractérisé en ce qu'**il existe une commande de routine présélectionnable (19) pour le chaintre (20).

8. Procédé selon la revendication 7,
**caractérisé en ce que** la commande de routine présélectionnable (19) pour la chaintre (20) comprend le fait que, d'abord le au moins un mécanisme de fauchage avant (2), puis les mécanismes de fauchage latéraux gauche et droit (3, 4), sont relevés et qu'ensuite ou en même temps le sens de travail du dispositif de transport (11) du mécanisme de fauchage avant (2) ou des dispositifs de transport (11) des groupes de mécanismes de fauchage avant (2) est inversé.

9. Procédé selon l'une ou plusieurs des revendications précédentes 7 et 8,
**caractérisé en ce que** la commande de routine présélectionnable (19) pour le chaintre (20) comprend le fait qu'après ou pendant l'inversion du sens de travail du dispositif de transport (11) du mécanisme de fauchage avant (2) ou des dispositifs de transport (11) des groupes de mécanismes de fauchage avant (2), le mécanisme de fauchage avant (2) ou les groupes de mécanismes de fauchage avant (2) relevés précédemment et ensuite les mécanismes de fauchage latéraux droit et gauche (3, 4) relevés précédemment sont abaissés.

10. Dispositif destiné à la formation de grands andains sur une surface agricole ayant au moins une première et une deuxième lignes de travail avec un mécanisme de fauchage automoteur à plusieurs éléments constitué d'au moins un mécanisme de fauchage avant, d'au moins un mécanisme de fauchage latéral droit et d'au moins un mécanisme de fauchage latéral gauche, des dispositifs de transport étant associés aux différents mécanismes de fauchage du mécanisme de fauchage, lesquels dispositifs de transport transportent la récolte essentiellement transversalement au sens de la marche du mécanisme de fauchage automoteur,
**caractérisé en ce que** le dispositif de transport d'au moins un mécanisme de fauchage latéral présente une direction de transport orientée vers l'extérieur afin de permettre le dépôt de l'andain sur le côté extérieur du mécanisme de fauchage latéral, **en ce que** la commande de lame de fauchage (18) du au moins un mécanisme de fauchage latéral droit ou gauche (3, 4) comporte un dispositif qui coupe automatiquement la commande de lame de fauchage (18) lors du relevage du mécanisme de fauchage latéral droit ou gauche (3, 4) et **en ce qu'**il est prévu des moyens de manière que le au moins un mécanisme de fauchage latéral droit (3) puisse être relevé pendant le travail du au moins un mécanisme de fauchage latéral gauche (4) et du au moins un mécanisme de fauchage avant (2) ou de manière que le au moins un mécanisme de fauchage latéral gauche (4) puisse être relevé pendant le travail du au moins un mécanisme de fauchage latéral droit (3) et du au moins un mécanisme de fauchage avant (2).
